# EUROPEAN PATENT APPLICATION

(11) **EP 4 749 892 A1**
(43) Date of publication of application: **27.05.2026**
(21) Application number: 24214470.7
(22) Date of filing: 21.11.2024
(51) Int. Cl.: H02K 9/19, H02K 3/24

(54) **COOLING SYSTEMS FOR E-MACHINES HAVING A WINDING ARRANGEMENT**

(71) Applicant: Garrett Transportation I Inc., Torrance, CA 90504 (US)
(72) Inventor: Zalibera, Tomas, Torrance, 90504 (US); Quinn, Cheney, Torrance, 90504 (US); Pikula, Jiri, Torrance, 90504 (US)
(74) Representative: Ingrassia, Fisher & Lorenz UK Ltd.

(57) **Abstract**

A deflector member for an e-machine cooling system. The deflector member is a unitary body comprising an annular ring portion comprising one or more through-holes disposed about the annular ring portion to allow for flow of fluid coolant therethrough. The annular ring portion has a first axial end and a second axial end, with a resilient engagement section formed at the second axial end. The resilient engagement section is configured to apply a reaction spring force when the resilient engagement section is compressed.

## Description

### TECHNICAL FIELD

The present disclosure relates, generally, to cooling systems for e-machines and, more particularly, to cooling systems for e-machines having a stator with a windings arrangement associated therewith.

### BACKGROUND

E-machines, such as electric motors, electric generators, and combination electric motor/generators, are provided for a variety of uses. For example, electric traction motors are used in electric vehicles, electric locomotives, and so on. Electric generators also have many industrial uses.

E-machine systems typically generate heat during operation. Additionally, e-machine systems may operate in high-temperature environments. Elevated temperatures may hinder performance and/or cause other disadvantages associated with the e-machine. Thus, it is desirable to include cooling features in the e-machine. However, the design and provision of such cooling features remains challenging. There may be detrimental increases in costs, part count, device complexity, size, bulkiness, and/or weight if such cooling features are included.

Thus, there remains a need for an e-machine system that provides effective cooling. There also remains a need for e-machine systems where the cooling features are provided in a relatively compact, low-weight arrangement. There is also a need for an e-machine system including cooling features that may be manufactured with high efficiency and with reduced costs and manufacturing time.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

According to a first aspect of the invention, there is provided a deflector member for an e-machine cooling system. The deflector member is a unitary body and includes an annular ring portion comprising one or more through-holes disposed about the annular ring portion to allow for flow of fluid coolant therethrough. The annular ring portion has a first axial end and a second axial end. The annular ring portion includes a resilient engagement section formed at either the first axial end or the second axial end. The resilient engagement section being configured to apply a reaction spring force when the resilient engagement section is compressed.

In an embodiment, the resilient engagement section comprises an annular protrusion, wherein the annular protrusion extends at an acute angle relative to a longitudinal axis of the annular ring portion. The annular protrusion is configured to resiliently flex when compressed.

In an embodiment, the unitary body is formed from an aluminium alloy.

In an embodiment, the unitary body is formed from plastic.

In an embodiment, a second resilient engagement section is formed at the other of the first axial end and the second axial end of the annular ring portion, the second resilient engagement section configured to apply a reaction spring force when the second resilient engagement section is compressed
In an embodiment, the second resilient engagement section comprises a second annular protrusion, wherein the second annular protrusion extends at an acute angle relative to a longitudinal axis of the annular ring portion, wherein the second annular protrusion is configured to resiliently flex when compressed so as to apply the reaction spring force.

According to a second aspect of the invention, there is provided an e-machine comprising an e-machine housing that defines a cavity therein. The e-machine includes a stator core received in the cavity, the stator core having a first axial end and a second axial end that are separated along a longitudinal axis, the stator core having at least one slot that extends between the first axial end of the stator core and the second axial end of the stator core, and a plurality of winding members. A rotor member is at least partially disposed within the stator core. The plurality of winding members include a plurality of segments that are received in the slot and that extend between the first axial end and the second axial end. End windings of the winding members are disposed at each of the first axial end of the stator core and the second axial end of the stator core. The e-machine housing has a fluid inlet fluidically connected to a fluid coolant system. The e-machine includes a deflector member, the deflector member being a unitary body comprising an annular ring portion comprising one or more through-holes disposed about the annular ring portion to allow for flow of fluid coolant therethrough, the annular ring portion having a first axial end and a second axial end. The annular ring portion is at least partially disposed about one of the end windings. The annular ring portion includes a resilient engagement section formed at the second axial end of the annular ring portion, the resilient engagement section being compressed against at least one of a first interior surface of the e-machine housing and an interior surface of a bearing housing connected to the e-machine housing; the resilient engagement section being configured to apply a reaction spring force to the at least one of the first interior surface of the e-machine housing and the interior surface of the bearing housing connected to the e-machine housing.

In an embodiment, the first axial end of the annular ring portion is compressed against at least one of the second axial end of the stator core and a second interior surface of the e-machine housing.

In an embodiment, the resilient engagement section comprises an annular protrusion, wherein the annular protrusion extends at an acute angle relative to a longitudinal axis of the annular ring portion, wherein the annular protrusion is configured to resiliently flex when compressed.

In an embodiment, the unitary body is formed from an aluminium alloy.

In an embodiment, the unitary body is formed from plastic.

In an embodiment, the unitary body further comprises a second resilient engagement section at the first axial end of the annular ring portion, the second resilient engagement section configured to apply a reaction spring force when the second resilient engagement section is compressed.

In an embodiment, the second resilient engagement section comprises a second annular protrusion, wherein the second annular protrusion extends at an acute angle relative to a longitudinal axis of the annular ring portion, and wherein the second annular protrusion is configured to resiliently flex when compressed so as to apply the reaction spring force.

In an embodiment, an outer radial surface of the annular ring portion of the deflector member is configured to engage with an interior radial surface of the e-machine housing to form a seal.

In an embodiment, the deflector member is not in direct contact with any O-rings inside the e-machine housing.

In an embodiment, the e-machine includes a second deflector member disposed at least partially about the other one of the end windings. The second deflector member is a unitary body comprising an annular ring portion that includes one or more through-holes disposed about the annular ring portion to allow for a flow of fluid coolant therethrough, the annular ring portion having a first axial end and a second axial end. The annular ring portion is at least partially disposed about one of the end windings. The annular ring portion includes a resilient engagement section formed at the second axial end of the annular ring portion, the resilient engagement section being compressed against at least one of a first interior surface of the e-machine housing and an interior surface of a bearing housing connected to the e-machine housing; the resilient engagement section being configured to apply a reaction spring force to the at least one of the first interior surface of the e-machine housing and the interior surface of the bearing housing connected to the e-machine housing.

In an embodiment, the e-machine is an electric motor or an electric generator.

Other desirable features and characteristics of the present disclosure will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 is a schematic of an e-machine;
FIG. 2 is an isometric view of an e-machine;
FIG. 3 is a cross-sectional view of an e-machine not according to the present invention;
FIG. 4 is an isometric view of certain internal components of an e-machine;
FIG. 5 is another cross-sectional view of an e-machine not according to the present invention;
FIG. 6 is a cross-sectional view of an e-machine according to embodiments; and
FIG. 7 is a cross-sectional view of a deflector member according to embodiments.

### DETAILED DESCRIPTION

The following detailed description is merely exemplary in nature and is not intended to limit the present disclosure or the application and uses of the present disclosure. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the present disclosure and not to limit the scope of the present disclosure, which is defined by the claims. Furthermore, there is no intention to be bound by any expressed or implied theory presented in the preceding technical field, background, brief summary, or the following detailed description.

Broadly, example embodiments disclosed herein include an e-machine system, such as an electric motor system or an electric generator system, having features that provide effective cooling for efficient high-temperature operation of the e-machine.

The stator member of the e-machine includes a stator core with a plurality of slots (i.e., grooves, passages, etc.) that extend between a first axial end and a second axial end of the stator core. The slots may extend along a respective longitudinal axis that is parallel to an axis of rotation of the rotating group of the e-machine. The slots may be circumferentially arranged (e.g., spaced equally) about the axis of rotation. In various embodiments, the slots may be open to the inner radial surface of the stator core. The stator core includes a plurality of winding members comprising a plurality of longitudinal segments that are received in respective slots. End windings of the winding members are formed at each axial end of the stator core, where winding members loop around back into the slot(s) formed in the stator core.

The e-machine system also includes a fluid coolant system that is configured to provide a cooling fluid (such as a refrigerant, coolant, oil, air, other gas, other liquid, etc.) to the e-machine. This fluid coolant may be provided to the slots to flow amongst the longitudinal segments of the windings. Alternatively, the fluid coolant may flow through dedicated cooling channels formed in the stator core. Thus, fluid coolant may be flow directly over, or close to, the windings in the slots of the stator core for effective cooling of the windings. In embodiments, the fluid coolant system provides pressurized cooling fluid to the e-machine. As will be explained in further detail below, coolant is also provided to the end windings for effective cooling of the end windings.

With the above configuration, the e-machine may be relatively compact and lightweight. This configuration of the e-machine may also provide manufacturing benefits, such as a relatively low part count, as well as ease of assembly, installation, repair, and replacement.

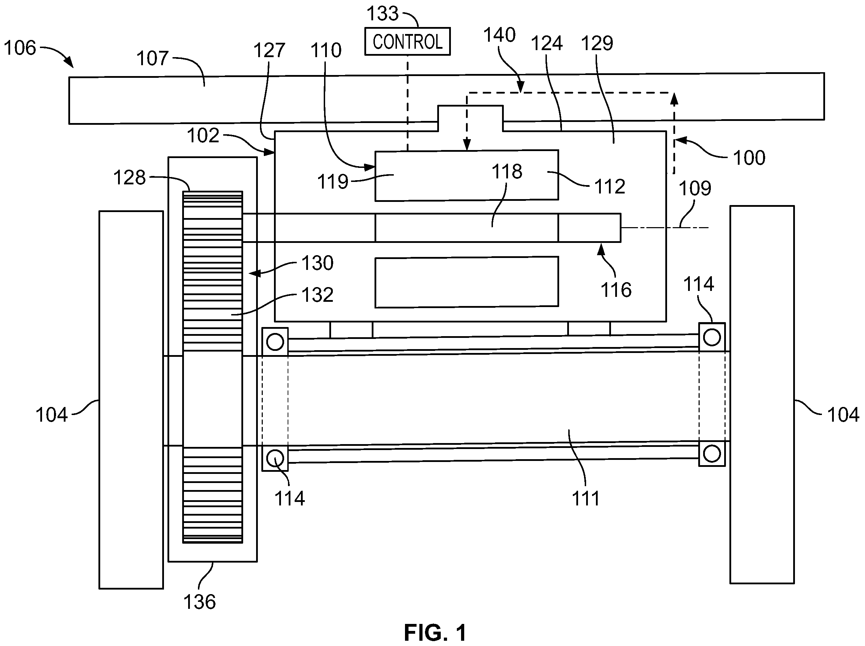

FIG. 1 is a schematic view of an e-machine system 100 according to example embodiments of the present disclosure. The e-machine system 100 may have a variety of configurations. In some embodiments, the e-machine system 100 may be configured as a traction drive system 102 that is included, for example, on a vehicle 106. Thus, the traction drive system 102 may be configured for driving one or more wheels 104 of the vehicle 106. More specifically, the wheels 104 may be included at opposite ends of an axle 111, and a chassis 107 may be supported on the wheels 104 by a suspension system (not shown). The vehicle 106 may be an electric car, truck, van, motorcycle, boat, or other vehicle. However, it will be appreciated that the e-machine system 100 may be configured otherwise without departing from the scope of the present disclosure, such as in the form of an electric generator that is not included on a vehicle.

Generally, the e-machine system 100 may include a housing 125. The housing 125 may include an e-machine housing 124 with a cavity 129 defined therein. The e-machine system 100 may also include an e-machine 110 that is received within the cavity 129 and at least partially housed within the e-machine housing 124.

The e-machine 110 may be an electric motor 112. For example, in some embodiments, the electric motor 112 may be an AC three-phase electric motor. However, it will be appreciated that the e-machine 110 may be configured otherwise. The e-machine 110 may alternatively be configured as an electric generator. Furthermore, the e-machine 110 may be operable in some modes as a motor and in additional modes as a generator. The e-machine 110 includes a rotor member 118 and a stator member 119 that are housed within the cavity 129 of the e-machine housing 124.

The rotor member 118 may be supported on a shaft 116, and the shaft 116 is supported for rotation about a longitudinal axis 109 within the e-machine housing 124. The stator member 119 of the e-machine 110 may be fixed within the e-machine housing 124 and at least partly surrounds the rotor member 118 and the shaft 116. In embodiments in which the e-machine 110 is an electric motor 112, the shaft 116 may be referred to as an output shaft 116 of the electric motor 112. In some embodiments, such as when the e-machine system 100 is mounted on a vehicle 106, a gear connection member 128 (e.g., a gear, a spline on the shaft 116, or other part with gear teeth features) may be operably supported on the shaft 116.

In various embodiments, the e-machine system 100 includes a gearbox130. The gearbox 130 may include a geartrain 132 that is housed within a gearbox housing 136 of the housing 125. The gearbox housing 136 may be attached (e.g., fixed) to a side wall 127 of the e-machine housing 124.

The geartrain 132 may operatively connect the e-machine 110 and the axle 111 and may transmit power therebetween. The e-machine 110 may be coupled to the wheels 104 via the gearbox 130. The geartrain 132 may be attached to the gear connection member 128 and to the axle 111. The gearbox housing 136 and the e-machine housing 124 may be moveably supported on the axle 111 by one or more bearings 114 (e.g., a bearing sleeve, suspension tube, etc.) such that the axle 111 may rotate relative thereto.

During operation, the electric motor 112 may rotatably drive the shaft 116 and the gear connection member 128 supported thereon. This rotational power may transfer to the geartrain 132, which may transmit the power to the axle 111 to rotate the wheels 104 and propel the vehicle 106. These operations may be controlled by a control system 133. The control system 133 may control speed of the motor 112 and/or other functions of the motor 112.

Furthermore, the e-machine system 100 may include a fluid coolant system 140. The fluid coolant system 140 may be configured for circulating a fluid, such as a fluid coolant, about the e-machine interior, as will be explained in more detail below. The fluid coolant may be oil, for example. In embodiments, the fluid coolant system 140 is configured to supply pressurized fluid coolant, and may comprise a pump or other such means for delivering pressurized fluid coolant.

The fluid coolant system 140 is coupled to the stator member 119. Accordingly, the fluid coolant system 140 is configured to provide cooling to the stator member 119. This, in turn, provides a degree of cooling to the rotor member 118, to bearings, and/or to other areas of the e-machine 110.

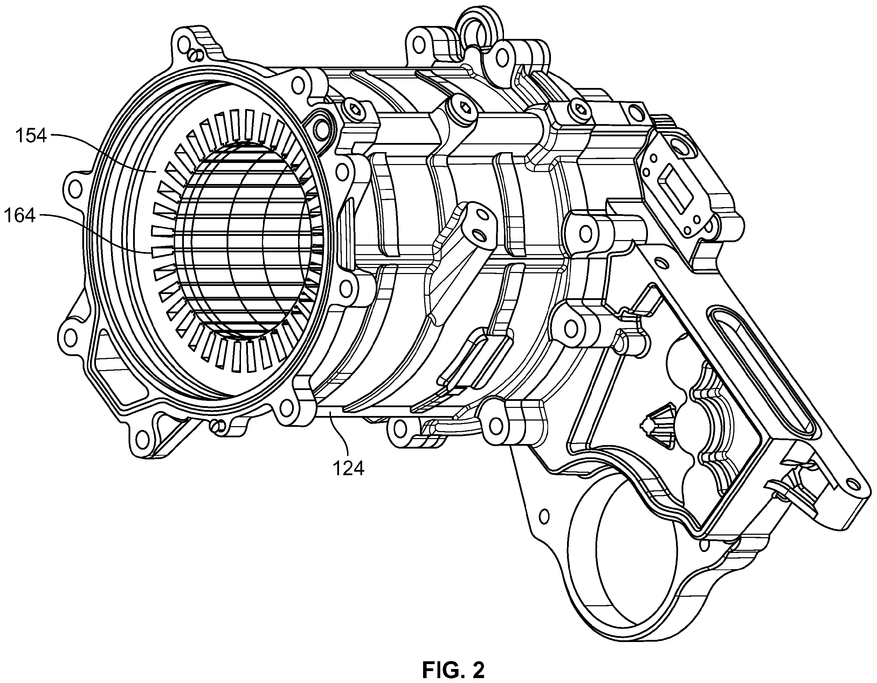

FIG. 2 shows an isometric view of an e-machine according to example embodiments. The e-machine housing 124 may be cylindrical and hollow. The e-machine includes a stator core 154 comprising slots 164. In various embodiments, the stator core 154 comprises a plurality of disc-shaped laminations that are bonded together in a stacked configuration and are arranged along the longitudinal axis so as to collectively define the stator core 154. Each one of disc-shaped laminations may have a width of from about 0.1mm to about 5mm. It will be appreciated that larger or smaller widths of laminations are also possible. It will also be appreciated that the laminations of the stator core 154 may individually include notches that, when stacked together, collectively define the slots 164. The slots may have various cross-sections, for example curved or rectangular cross-sections. In some embodiments, the slots 164 may be open at an inner radial surface of the stator core 154. Alternatively, the slots 164 may be closed at the inner radial surface. Each slot 164 extends parallel to the longitudinal axis 109 between a first axial end and a second axial end of the stator core 154. The slots 164 may be open at the first axial end 160 and the second axial end 162 of the stator core 154. The plurality of slots 164 may be disposed in a circumferentially spaced arrangement (e.g., be equally spaced) about the longitudinal axis.

As described above, a plurality of windings (i.e., winding members, wiring members, etc.) may be disposed with the plurality of slots 164. The windings (not shown in this figure) are electrically conductive and typically comprise a plurality of elongate segments. The windings are arranged in a plurality of coils that wrap back-and-forth between first and second axial ends of the stator core 154 and between different ones of the plurality of slots 164. Accordingly, the windings include a plurality of longitudinal segments that are received in the slots 164 of the stator core 154 and that extend generally along the axis of the respective slot 164. When energized, the windings generate a magnetic field that applies a force to a rotor shaft disposed within the stator core 154.

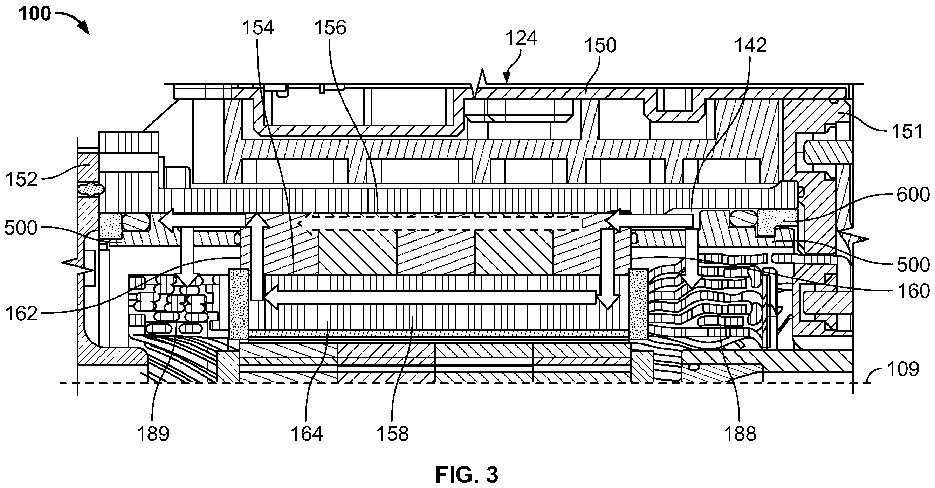

With reference to FIG. 3, which shows an example of a stator assembly not in accordance with the present invention, the windings include a plurality of first end windings 188 proximate to a first axial end 160 of the stator core 154 and a plurality of second end windings 189 proximate to a second axial end 162 of the stator core 154. The first end windings 188 connect respective pairs of longitudinal segments of windings within different slots 164, and the first end windings 188 may be disposed outside of the stator core 154 at the first axial end 160 of the stator core 154. In some embodiments, at least one of the first end windings 188 may extend away from the first axial end 160 to electrically connect the windings to the control system 133 shown in FIG. 1. Furthermore, the second end windings 189 connect respective pairs of the longitudinal segments in different slots 164. The second end windings 189 may be disposed outside of the stator core 154 at the second axial end 162. The first and second end windings 188, 189 electrically connect ones of the longitudinal segments of windings for operation of the stator member 119 and/or for operative connection to the control system 133.

As noted above, it is desirable to cool the stator core 154 and the end windings 188, 189 during operation. In order to provide cooling to the stator core, and referring again to FIG. 1, the fluid coolant system 140 may be fluidly connected to fluid passageways formed within slots of the stator core 154 in order to provide fluid coolant therethrough. This configuration is shown through the use of solid arrows flowing radially toward the longitudinal axis 109, through slots of the stator core 109 and then radially away from the longitudinal axis. Additionally or alternatively, cooling channels may be provided through the stator core. This configuration is shown through the use of a solid arrow extending through the stator core parallel to the longitudinal axis. As noted above, the fluid coolant provided by the fluid coolant system 140 may be pressurized for either configuration. Additionally, as shown in FIG. 3, the e-machine housing 124 may include a fluid inlet 142 in either configuration. Accordingly, during operation, fluid coolant supplied through the fluid inlet 142 is able to flow through the stator core 154 and to receive heat from the stator core 154.

It is also desirable to cool the end windings 188, 189 during operation of the e-machine. In order to ensure the end windings 188, 189 are not flooded with liquid coolant, deflector members 500 are used to at least partly redirect coolant flow from the fluid inlet 142 away from the end windings 188, 189. In order to provide cooling to the end windings 188, 189, fluid coolant may be sprayed onto the end windings 188, 189 of the stator via holes / spray jets formed in a deflector member 500 that is positioned between the fluid inlet 142 and a first end winding 188 and in another deflector member 50- that is arranged about the second end winding 189.

In operation, fluid coolant is introduced into the housing 124 via the fluid inlet 142. This fluid coolant flows to the first deflector 500 arranged about the first end winding 188. Some of this fluid coolant is sprayed onto the first end winding 188 via holes formed around an annular body of the deflector 500. The remaining fluid coolant flows through or about the stator core 154. The same deflector configuration may be used in the area proximate to the second end winding 188, where a portion of the fluid coolant may be sprayed onto the second end winding 189 via holes formed in the second deflector 500.

Accordingly, fluid coolant received via the fluid inlet 142 may effectively cool the windings of the stator core without flooding the end windings 188, 189. The end windings 188, 189 are effectively cooled by the spray of fluid coolant from the deflectors 500. Accordingly, the fluid coolant system 140 may effectively cool the e-machine system 100. Furthermore, the e-machine system 100 may be compact and lightweight. Also, the part count may be relatively low, and the e-machine system 100 may be manufactured with high efficiency.

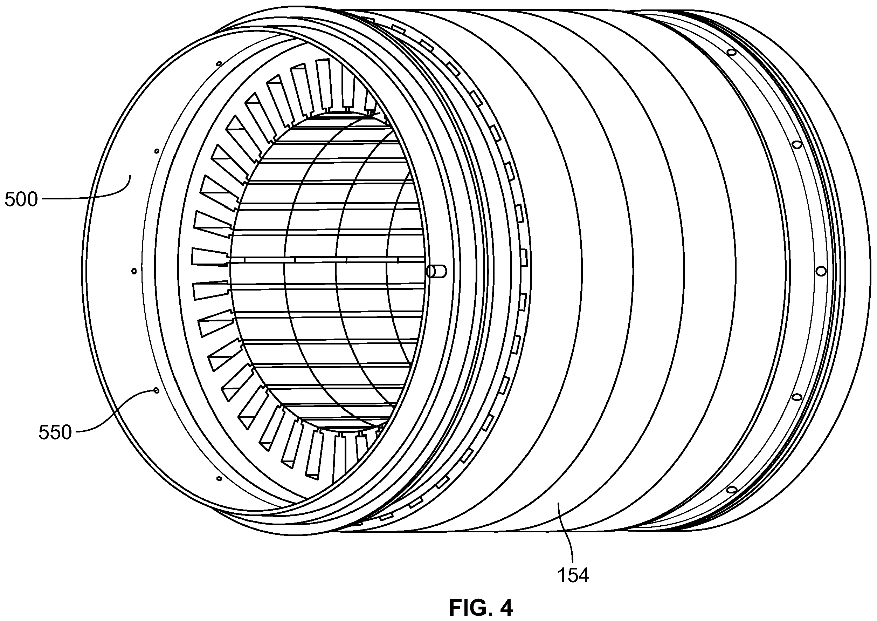

An isometric view of a stator core 154 and deflector members 500 is shown in FIG. 4. As can be seen in this figure, the deflector members 500 may extend annularly around the longitudinal axis of the stator core 154 and may include one or more holes 550 that allow for fluid coolant received from the fluid inlet to be sprayed onto end windings of the stator member whilst redirecting a portion of this flow of fluid coolant to prevent flooding of the end windings.

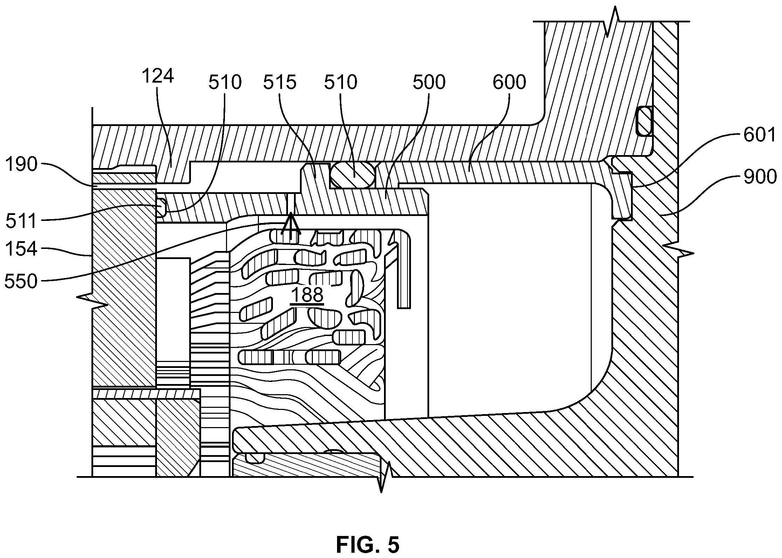

Another cross-section view of a stator assembly including deflector members is shown in FIG. 5, which is not in accordance with embodiments of the present invention. As can be seen in FIG. 5, the deflector member 500 includes one or more holes 550 to allow for fluid coolant received from the fluid inlet (not shown in this figure) to be sprayed onto the end windings 188. However, in order to prevent fluid coolant from flooding the end winding 188, the deflector member 500 must provide an adequate seal against the flow of fluid coolant from the fluid inlet.

In an example not forming part of the present invention, this sealing may be achieved with the configuration shown in FIG. 5. As can be seen in FIG. 5, a distance ring 600 may be incorporated within the e-machine housing 124. A first end 601 of the distance ring 600 may abut against an interior surface of the e-machine housing 124. Alternatively as shown in FIG. 5, the first end 601 of the distance ring 600 may abut against an interior surface of a bearing housing 900. A second end of the distance ring 600 abuts against a first resilient ring 510. This first resilient ring 510 may be an O-ring. When the e-machine is assembled, the first resilient ring 510 is compressed by the distance ring 600 against a protrusion 515 of the deflector member 500 and against a radially interior surface of the e-machine housing 124. In this manner, fluid coolant is prevented from flowing past the first resilient ring 510.

Similarly, the stator assembly may include a second resilient ring 511 that is compressed between an axial end of the deflector member 500 and the stator core 154. In this manner, fluid coolant is prevented from flowing past the second resilient ring 511. The second resilient ring 511 may be an O-ring. As such, fluid coolant is directed through a dedicated cooling channel 190 formed in the stator core 154.

Whilst the above-described configuration effectively seals both ends of the deflector member 500 against fluid coolant flow, the present inventors recognized that this sealing configuration required multiple parts, which increases the manufacturing complexity and cost of the stator assembly. Additionally, manufacturing tolerances and thermal effects could affect the fit and sealing performance of the first and second resilient rings 510, 511, thereby leading to degraded sealing performance.

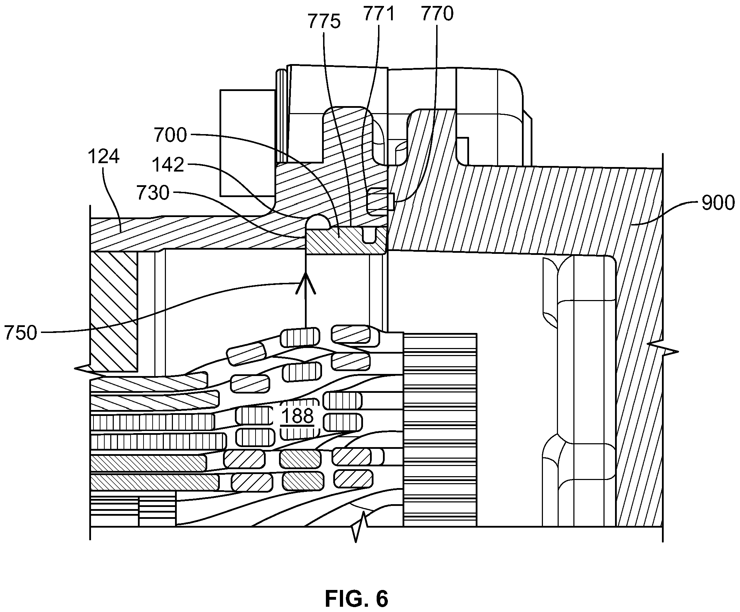

In order to improve or maintain the effectiveness of sealing against fluid coolant flow whilst reducing manufacturing cost and complexity, the present inventors designed an improved deflector member. FIG. 6 shows a cross-sectional view of a deflector member 700 in accordance with embodiments of the invention. As can be seen in FIG. 6, the deflector member includes one or more through-holes 750 to allow for spraying of fluid coolant onto the end winding 188. However, the deflector member 700 does not require the use of separate resilient rings or a distance ring in order to effectively seal against fluid coolant flow from the fluid inlet. The deflector member 700 includes a resilient engagement section 770 that is configured to abut against an interior surface of the e-machine housing 124. Specifically, as can be seen in FIG. 6, the deflector member 700 includes an annular ring portion with a first axial end 730 configured to abut against an interior surface of the e-machine housing 124. Alternatively, the first axial end may be configured to abut against an axial end of the stator core (not shown in this figure). The annular ring portion of the deflector member 700 includes a resilient engagement section 770 formed at a second axial end thereof, where the resilient engagement section 770 is configured to abut against and be compressed by an interior surface of the bearing housing 900. In alternative configurations, resilient engagement section 770 is configured to abut against and be compressed by an interior surface of the e-machine housing 124. Irrespective of what surface the resilient engagement section is configured to abut against, the resilient engagement section 770 is configured to be compressed by that surface, when the e-machine is assembled, such that the resilient engagement section 770 is configured to apply a reaction spring force to that surface. This reaction spring force is sufficient to allow for effective sealing against fluid coolant flow by the resilient engagement section 770.

For example, in the embodiment shown in FIG. 6, the resilient engagement section 770 is compressed by and configured to apply a reaction spring force to the interior surface of the bearing housing 900 connected to the e-machine housing 124. The resilient engagement section 770 and the interior surface of the bearing housing 900 therefore forms a seal against the flow of fluid coolant. Additionally, the reaction spring force of the resilient engagement section 770 against the interior surface of the bearing housing 900 allows for effective sealing even when thermal effects such as the thermal expansion of components and manufacturing tolerances are taken into account. This advantageous effect of the resilient engagement section 770 may be achieved irrespective of the specific surface the resilient engagement section 770 is compressed by.

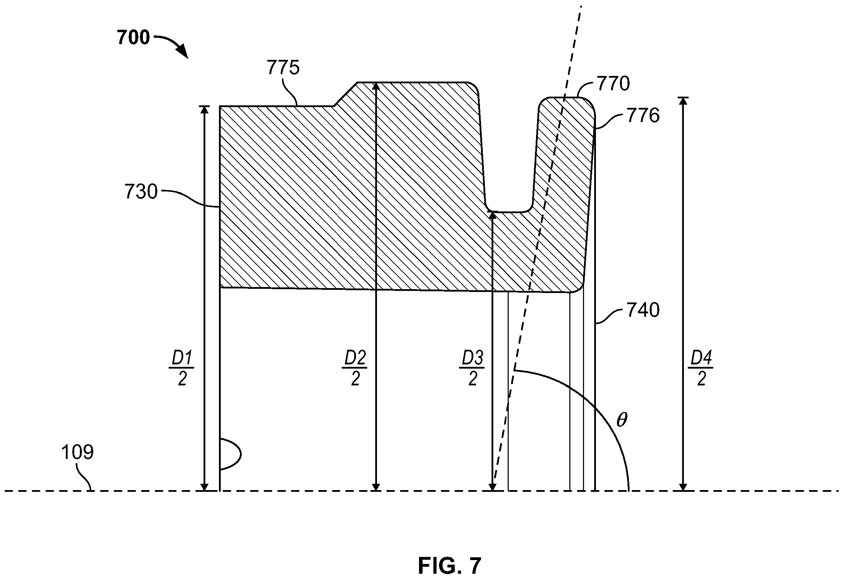

A cross-sectional view of the deflector member 700 including a resilient engagement section 770 is shown in FIG. 7. In embodiments, the resilient engagement section 770 includes an annular protrusion 776, where the annular protrusion 776 extends at an acute angle θ relative to a longitudinal axis 109 of the annular ring portion 775. The annular protrusion 776 is configured to resiliently flex when compressed. In the embodiment shown in FIG. 7, the annular protrusion 776 is configured to resiliently flex away from the longitudinal axis 109 when compressed, such that the angle θ increases when the resilient engagement section 770 is compressed when it is installed in the e-machine. In the installed state, the compressed annular protrusion 776 applies a reaction spring force to an interior surface of the e-machine housing 124, to an interior surface of the bearing housing 900, or to another suitable interior surface.

It will be appreciated that the shape and thickness of the resilient engagement section 770 may be selected to provide a sufficient reaction spring force for the expected operating conditions of the e-machine, and to compensate for different manufacturing tolerances or thermal effects on components in the e-machine. For example, instead of an annular protrusion 776 being configured to apply the reaction spring force when compressed by the interior surface of the e-machine housing, a helical spring-type arrangement may be used, or other such resiliently flexing arrangements may be used.

Returning to FIG. 6, the deflector member 700 including the resilient engagement section 770 may be formed in a single piece, and eliminates the need for additional parts such as resilient O-rings in order to provide effective sealing. In particular, the deflector member 700 need not be in contact with any O-rings to provide effective sealing.

As can be seen in FIGs. 6 and 7, the diameter of the deflector member 700 may vary from a first axial end 730 thereof to the resilient engagement section 770 formed at a second axial end of the deflector member 700. In particular, in the embodiment shown in FIGs. 6 and 7, the deflector may have a first diameter D1 at the first axial end 730, wherein the first diameter increases to a second diameter D2 at a first intermediate point between the first axial end 730 and the second axial end, the second diameter decreases to a third diameter D3 at a second intermediate point between the first intermediate point and the second axial end, and the third diameter increases to a fourth diameter D4 at the resilient engagement section 770 formed at the second axial end of the deflector member 700. In this manner, an outer radial surface of annular ring portion 775 of the deflector member 700 may, at the location of the second diameter, also act to seal against fluid coolant flow. This can be seen in FIG. 6, where an outer radial surface of the annular ring portion 775 is configured to abut against a radially inner surface of the e-machine housing 124 so as to form an additional seal against fluid coolant flow. When the deflector member 700 is compressed, for example, between interior surfaces of the e-machine housing 124 and the bearing housing 900, not only is the resilient engagement section 770 compressed, but the annular ring portion 775 is forced radially outwardly against the radially inner surface of the interior housing 124 at the location of the second diameter of the annular ring portion 775, which is the largest diameter of the annular ring portion 775. This forcing of the radially outer surface of the annular ring portion 775 against an interior surface of the e-machine housing 124 therefore improves the seal against fluid coolant flowing out of the fluid inlet 142.

The material of the deflector member 700 may be selected depending upon the requirements of the e-machine. In embodiments, the deflector member 700 is formed from plastic or an aluminium alloy. Forming the deflector member 700, as a unitary body from plastic or aluminium alloy also allows for efficient manufacturing techniques to be used in the formation of the deflector member 700, such as plastic injection molding, whilst reducing the part count of the e-machine cooling system.

As will be appreciated from FIG 6, when the deflector member 700 is installed in the e-machine, the first axial end 730 of the deflector member will also form a seal due to this first axial end 730 being compressed against an interior surface of the e-machine housing 124. Research by the inventors has shown that the seal formed between these surfaces effectively resists against ingress of fluid coolant. However, it will be understood that it is also possible, in alternative embodiments, to incorporate a second resilient engagement section at the first axial end 730 of the deflector member 700. The section resilient engagement section may have the same configuration as the above-described resilient engagement section 770 disposed at the second axial end of the deflector member 700. Still further, in other embodiments, a resilient engagement section may only be formed at the first axial end 730 of the deflector member 700, with no resilient engagement section being formed at the second axial end of the deflector member 700.

It will also be appreciated that the deflector member 700 may be installed in either the e-machine housing 124 or the bearing housing 900. Although FIG. 6 shows the deflector member 700 being disposed within a section of the e-machine housing 124, it will be appreciated that the deflector member 700 may alternatively be disposed within a section of the bearing housing 900. Each of these possibilities are referred to as installing the deflector member 700 within the e-machine.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the present disclosure as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

As used herein, the term "axial" refers to a direction that is generally parallel to or coincident with an axis of rotation, axis of symmetry, or centerline of a component or components. For example, in a cylinder or disc with a centerline and generally circular ends or opposing faces, the "axial" direction may refer to the direction that generally extends in parallel to the centerline between the opposite ends or faces. In certain instances, the term "axial" may be utilized with respect to components that are not cylindrical (or otherwise radially symmetric). For example, the "axial" direction for a rectangular housing containing a rotating shaft may be viewed as a direction that is generally parallel to or coincident with the rotational axis of the shaft. Furthermore, the term "radially" as used herein may refer to a direction or a relationship of components with respect to a line extending outward from a shared centerline, axis, or similar reference, for example in a plane of a cylinder or disc that is perpendicular to the centerline or axis. In certain instances, components may be viewed as "radially" aligned even though one or both of the components may not be cylindrical (or otherwise radially symmetric). Furthermore, the terms "axial" and "radial" (and any derivatives) may encompass directional relationships that are other than precisely aligned with (e.g., oblique to) the true axial and radial dimensions, provided the relationship is predominantly in the respective nominal axial or radial direction. As used herein, the term "substantially" denotes within 5% to account for manufacturing tolerances. Also, as used herein, the term "about" denotes within 5% to account for manufacturing tolerances.

While at least one exemplary embodiment has been presented in the foregoing detailed description of the present disclosure, it should be appreciated that a vast number of variations exist. It should also be appreciated that the exemplary embodiment or exemplary embodiments are only examples, and are not intended to limit the scope, applicability, or configuration of the present disclosure in any way. Rather, the foregoing detailed description will provide those skilled in the art with a convenient road map for implementing an exemplary embodiment of the present disclosure. It being understood that various changes may be made in the function and arrangement of elements described in an exemplary embodiment without departing from the scope of the present disclosure as set forth in the appended claims.

## Claims

1. A deflector member (700) for an e-machine cooling system, the deflector member being a unitary body comprising:
an annular ring portion (775) comprising one or more through-holes (750) disposed about the annular ring portion to allow for flow of fluid coolant therethrough, the annular ring portion having a first axial end (730) and a second axial end; and
a resilient engagement section (770) formed at one of the first axial end and the second axial end, the resilient engagement section configured to apply a reaction spring force when the resilient engagement section is compressed.

2. The deflector member (700) of Claim 1, wherein the resilient engagement section (770) comprises an annular protrusion (776), wherein the annular protrusion extends at an acute angle (θ) relative to a longitudinal axis (109) of the annular ring portion, and wherein the annular protrusion is configured to resiliently flex when compressed so as to apply the reaction spring force.

3. The deflector member of Claim 1 or 2, wherein the unitary body of the deflector member (700) is formed from an aluminium alloy.

4. The deflector member of Claim 1 or Claim 2, wherein the unitary body of the deflector member (700) is formed from plastic.

5. The deflector member of any preceding claim, wherein the unitary body further comprises a second resilient engagement section at the other of the first axial end and the second axial end, the second resilient engagement section configured to apply a reaction spring force when the second resilient engagement section is compressed.

6. The deflector member of Claim 5, wherein the second resilient engagement section comprises a second annular protrusion (776), wherein the second annular protrusion extends at an acute angle (θ) relative to a longitudinal axis (109) of the annular ring portion, and wherein the second annular protrusion is configured to resiliently flex when compressed so as to apply the reaction spring force.

7. An e-machine comprising:
an e-machine housing (124) that defines a cavity (129) therein,
a stator core (154) received in the cavity, the stator core having a first axial end (160) and a second axial end (162) that are separated along a longitudinal axis (109), the stator core having at least one slot (164) that extends between the first axial end and the second axial end;
a rotor member (118) at least partially disposed within the stator core;
a plurality of winding members, the plurality of winding members comprising a plurality of segments that are received in the slot and that extend between the first axial end of the stator core and the second axial end of the stator core, and end windings (188, 189) disposed at the first axial end (160) and the second axial end (162);
the e-machine housing having a fluid inlet (142), the fluid inlet fluidically connected to a fluid coolant system (140); and
a deflector member (700), the deflector member being a unitary body comprising:
an annular ring portion (775) comprising one or more through-holes (750) disposed about the annular ring portion to allow for flow of fluid coolant therethrough, the annular ring portion having a first axial end (730) and a second axial end, the annular ring portion being at least partially disposed about one of the end windings (188, 189); and
a resilient engagement section (770) formed at the second axial end of the annular ring portion, the resilient engagement section being compressed against at least one of a first interior surface of the e-machine housing (124) and an interior surface of a bearing housing connected to the e-machine housing; the resilient engagement section configured to apply a reaction spring force to the at least one of the first interior surface of the e-machine housing (124) and the interior surface of the bearing housing connected to the e-machine housing.

8. The e-machine of Claim 7, wherein the first axial end of the annular ring portion (775) is compressed against at least one of the second axial end (162) of the stator core (154) and a second interior surface of the e-machine housing (124).

9. The e-machine of Claim 7 or 8, wherein the resilient engagement section (770) comprises an annular protrusion (776), wherein the annular protrusion extends at an acute angle relative to a longitudinal axis (109) of the annular ring portion, and wherein the annular protrusion is configured to resiliently flex when compressed so as to apply the reaction spring force.

10. The e-machine of any of Claims 7 to 9, wherein the unitary body further comprises a second resilient engagement section at the first axial end of the annular ring portion, the second resilient engagement section configured to apply a reaction spring force when the second resilient engagement section is compressed.

11. The e-machine of Claim 11, wherein the second resilient engagement section comprises a second annular protrusion, wherein the second annular protrusion extends at an acute angle relative to a longitudinal axis (109) of the annular ring portion, and wherein the second annular protrusion is configured to resiliently flex when compressed so as to apply the reaction spring force.

12. The e-machine of any of Claims 7 to 11, wherein the unitary body of the deflector member is formed from plastic or an aluminium alloy.

13. The e-machine of any of Claims 7 to 12, wherein an outer radial surface of the annular ring portion of the deflector member (700) is configured to engage with an interior radial surface of the e-machine housing (124) to form a seal.

14. The e-machine of any of Claims 7 to 13, wherein the deflector member (700) is not in direct contact with any O-rings when the deflector member (700) is installed in the e-machine.

15. The e-machine of any of Claims 7 to 14, wherein the e-machine is an electric motor or an electric generator.
